# EUROPÄISCHE PATENTSCHRIFT

(11) **EP 4 033 062 B1**
(45) Veröffentlichungstag und Bekanntmachung des Hinweises auf die Patenterteilung: **15.01.2025**
(21) Anmeldenummer: 22152816.9
(22) Anmeldetag: 21.01.2022
(51) Int. Cl.: E05F 11/06, F16G 13/20, E05F 15/619

(54) **SCHUBKETTENANORDNUNG**
PUSH CHAIN ASSEMBLY
AGENCEMENT DE CHAÎNE DE POUSSÉE

(30) Priorität: 22.01.2021 DE 102021200593
(43) Veröffentlichungstag der Anmeldung: 27.07.2022
(73) Patentinhaber: K+G Pneumatik GmbH, 52249 Eschweiler (DE)
(72) Erfinder: Urbansky, Christof, 52379 Langerwehe (DE)
(74) Vertreter: Tergau & Walkenhorst Intellectual Property GmbH

(56) Entgegenhaltungen:
- DE-U1- 202018 107 202
- DE-U1- 29 514 179
- US-A- 2 755 122

## Beschreibung

Die Erfindung betrifft eine Schubkettenanordnung mit einer aus einer Mehrzahl von Kettengliedern zusammengesetzten Schubkette, die sich bei Krafteinwirkung entlang einer Biegerichtung umlenken lässt, und die sich bei Kraftbeinwirkung entlang einer Sperrrichtung in eine schubstabile, vorzugsweise geringfügig überstreckte Konfiguration bringen lässt.

Derartige Schubketten sind beispielsweise aus der EP 3 396 095 B1 bekannt. Sie dienen dort als Bestandteil eines Kettenschubantriebs zur Betätigung von beweglichen Flügeln, Türen oder Klappen, insbesondere von Lüftungsklappen, speziell in Gebäudedecken.

Derartige Konstruktionen neigen dazu, beim Ausfahren der Schubkette in seitlicher Richtung auszuknicken oder auszubiegen. Derartige Instabilitäten sind systembedingt und treten bereits bei geringen Fluchtabweichungen der Verbindung zwischen Kettenantrieb und zu betätigendem Gerät / Flügel / Klappe auf. Insbesondere bei großen Hubhöhen und entsprechend langen Ketten kann dies zum Verdrehen und letztlich zum frühen Versagen der Kette führen.

Eine Schubkettenanordnung mit den Merkmalen des Oberbegriffs von Anspruch 1 ist aus der DE 20 2018 107 202 U1 bekannt. Ähnliche Schubkettenanordnungen sind auch in US 2 755 122 A und DE 295 14 179 U1 offenbart.

Aufgabe der Erfindung ist es, eine Schubkettenanordnung bzw. ein Schubkettensystem - also Schubkette an sich plus weitere Komponenten - der genannten Art anzugeben, welche(s) auf einfache und kostengünstige Weise die genannten Instabilitäten bei Schubketten verringert oder vermeidet, und zwar möglichst universell für unterschiedliche Kettentypen.

Die Aufgabe wird erfindungsgemäß gelöst durch eine Schubkettenanordnung mit den Merkmalen des Anspruchs 1.

Erfindungswesentlich ist demnach unter anderem, dass an einem Ende der Schubkette ein Abschlussstück montiert ist, welches mit einem zur Anbringung an ein zu betätigendes Objekt vorgesehenen Anschlusselement verbunden ist, wobei das Abschlussstück derart kippbar oder schwenkbar und mittels eines Federelements federbelastet in/an dem Anschlusselement gelagert ist, dass die Schubkette bei Schubbelastung automatisch durch die Federkraft des Federelements in die schubstabile Konfiguration (vorzugsweise mit geringfügiger Rückenbiegung) gebracht wird.

Die Erfindung geht von der Überlegung aus, die Schubkette bei Schubbeanspruchung gezielt vorzuspannen, und zwar in die Sperrrichtung, so dass sich automatisch die besonders stabile, vorzugsweise geringfügig überstreckte Konfiguration mit leichter Rückenbiegung einstellt. Dadurch wird das Verhalten der Kette stabil und kontrollierbar. Ein seitlicher Versatz und/oder seitliche Störkräfte werden dadurch kompensiert und unschädlich gemacht. Die seitliche Auslenkung bei seitlichen Kräften wird verringert. Im Rahmen der Erfindung wird dies durch eine federbelastete exzentrische Lagerung des Kettenendes in einem zur Anbringung an das zu betätigendes Objekt vorgesehenen Anschlusselement (Formstück) erreicht. Die zur Vorspannung der Schubkette gewünschte Auslenkung wird bei Schubbeanspruchung durch Verkippen der Lagerpunkte infolge der Federkraft erzielt. Weitere Führungs- oder Abstützelemente für den frei laufenden Kettenabschnitt sind nicht erforderlich. Bei Zugbeanspruchung wird das Federelement entlastet und die Lagerung geht wieder in die Grundstellung zurück.

In erfindungsgemäßer Ausgestaltung dieses Grundgedankens sind das Abschlussstück und das Anschlusselement über einen Querbolzen miteinander verbunden, wobei der Querbolzen auf der einen Seite in einem Rundloch und auf der anderen Seite in einem Langloch des Anschlusselements gelagert ist. Das Federelement ist bevorzugt am Anschlusselement befestigt und wirkt direkt auf den Querbolzen. Die Verbindung zwischen Abschlussstück und Anschlusselement ist vorzugswese durch Herausziehen des Querbolzens lösbar.

Bevorzugt kommt die Schubkettenanordnung zum Einsatz in einer Betätigungsvorrichtung für ein bewegliches Objekt, insbesondere ein Flügel, eine Klappe, ein Fenster oder eine Tür, wobei das Anschlusselement in diesem Fall fest mit dem Objekt verbunden ist. Bevorzugt wird die Schubkette durch eine Antriebseinheit mit einem Motor angetrieben.

Ein Ausführungsbeispiel der Erfindung ist in den Zeichnungen beispielhaft und schematisch dargestellt. Es zeigen:

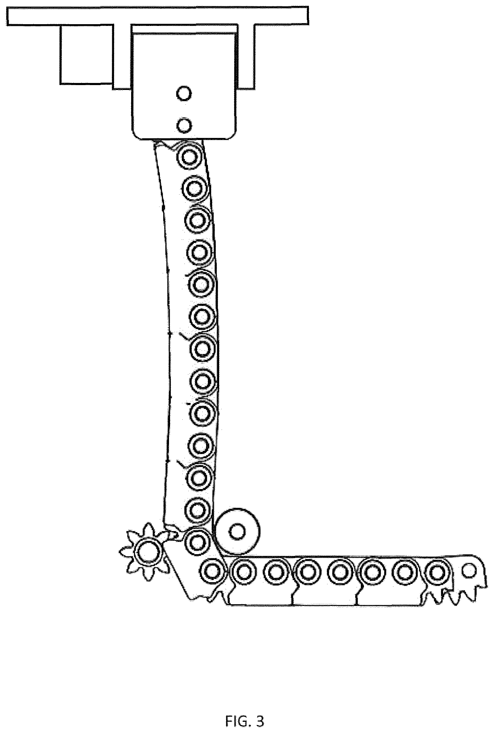

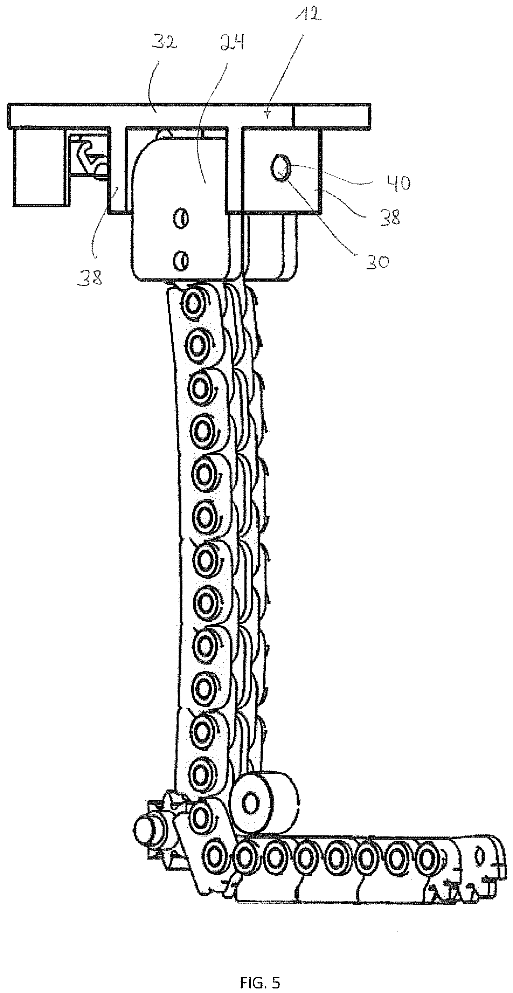

- FIG. 1 bis 5: mehrere perspektivische Ansichten einer Schubkette mit einem endseitig montierten Anschlusselement, und
- FIG. 6 bis 7: zwei vergrößerte perspektivische Ansichten der Schubkette im Bereich des Anschlusselements.

Die in den Figuren dargestellte Schubkette 2 dient in Verbindung mit einem zugehörigen Antrieb zur Bewegung oder Betätigung eines beweglichen, insbesondere schwenkbaren Flügels, einer Verschlussklappe, einer Lüftungsklappe oder eines ähnlichen Objekts.

Die Schubkette 2 weist eine Mehrzahl von Kettengliedern 4 auf, die mittels Kettenbolzen 6 drehbeweglich bzw. schwenkbar miteinander verbunden sind. Die Schubkette 2 ist dazu ausgelegt, in Zugrichtung 8 Zugkräfte und in entgegengesetzter Schubrichtung 10 Schubkräfte auf das zu betätigende Objekt auszuüben. Zur Befestigung oder Verbindung mit dem zu betätigenden Objekt ist die Schubkette 2 an ihrem dem Objekt zugewandten Ende mit einem Verbindungs- oder Anschlusselement 12, welches auch als Kuppelbock bezeichnet wird, versehen oder verbunden.

Durch geeignete Formgebung der Kettenglieder 4 ist die Schubkette 2 dazu ausgelegt, bei Krafteinwirkung in Biegerichtung 14 eine Durchbiegung mit vergleichsweise geringem Biegeradius und damit einhergehend eine Richtungsänderung oder Umlenkung zu ermöglichen. Hier im Beispiel erfolgt eine Umlenkung von rund 90° an einer zugeordneten Umlenkrolle 16. Bei Krafteinwirkung in entgegengesetzter Richtung, der sogenannten Sperrrichtung 18, lässt sich die Schubkette 2 nur geringfügig über den gestreckten Zustand hinaus verbiegen (sogenannte Rückenbiegung). Solch ein geringfügig überstreckter Zustand besteht hier im Beispiel für den Kettenabschnitt zwischen der Umlenkrolle 16 und dem Anschlusselement 12. Bei entsprechender Krafteinwirkung in Quer- oder Seitenrichtung 20, insbesondere durch den Kettenantrieb, und/oder infolge eines seitlichen Versatzes zwischen Umlenkrolle 16 und Anschlusselement 12 kann zudem eine geringfügige Seitenbiegung vorliegen.

Der verwendete Begriff geringfügig überstreckt' heißt hier, dass der Biegeradius der Rückenbiegung viel größer als der Biegeradius in Biegerichtung ist, so dass die Winkelabweichung von der maximal gestreckten Konfiguration, wie sie etwa bei Zugbelastung erreicht wird, bei der Rückenbiegung maximal nur wenige Grad, bevorzugt nur Bruchteile davon, auf die Länge von einem oder mehreren Kettengliedern beträgt.

Der Antrieb der Schubkette 2 erfolgt bevorzugt mittels eines Zahnrades, auch Antriebsritzel oder Kettenrad 22 genannt, welches hier im Beispiel auf der der Umlenkrolle 16 gegenüberliegenden Seite der Schubkette 2 angeordnet ist und mit den Kettengliedern 6 kämmt. In Erstreckungsrichtung (Längsrichtung) der Schubkette 2 gesehen liegen Umlenkrolle 16 und Kettenrad 22 hier im Beispiel im Wesentlichen auf gleicher Position, spannen die Schubkette 2 an dieser Stelle also beidseitig ein.

In einer typischen Anwendungssituation ist das zu betätigende Objekt, etwa eine Lüftungsklappe, in einer Gebäudedecke angeordnet. Die räumliche Ausrichtung der Schubkette 2 entspricht dann der Ausrichtung in den Figuren: Ein horizontal verlaufender Abschnitt der Schubkette 2 wird an der Umlenkrolle 16 umgelenkt und geht in einen im Wesentlichen vertikal verlaufenden Abschnitt über, der am oberen Ende mit Hilfe des Anschlusselements 12 an das zu betätigende Objekt gekoppelt ist.

Bei der Schubbewegung nach oben ist es wünschenswert, dass sich der vertikale Abschnitt der Schubkette 2 im Wesentlichen in der leicht überstreckten Konfiguration mit leichter Rückenbiegung - wie in den Figuren dargestellt - befindet, um ein seitliches Ausbiegen in Seitenrichtung 20 und damit einhergehende Instabilitäten weitestmöglich zu verhindern. Auf keinen Fall darf ein Ausbiegen oder Ausknicken in Biegerichtung 14 erfolgen, um ein unkontrolliertes Zusammenklappen der Schubkette zu verhindern.

Um dieses Ziel auch ohne zusätzliche Führungselemente oder Schienen zu erreichen, wird erfindungsgemäß mit Hilfe des Anschlusselements 12 eine Vorspannung des zwischen Umlenkrolle 16 und Anschlusselement 12 liegenden Abschnitts der Schubkette 2 in Sperrrichtung erzeugt. Durch die Vorspannung befindet sich dieser Abschnitt, unabhängig davon wie lang er ist (wie weit also die Schubkette 2 nach oben ausgefahren ist), in der leicht überstreckten Konfiguration. Das heißt, die Schubkette 2 wird entsprechend stabilisiert.

Zu diesem Zweck umfasst die Schubkette 2 am oberen, dem Anschlusselement 16 zugewandten Ende ein U-förmiges Abschlussstück 24, das fest mit dem letzten (oder ersten, je nach Sichtweite) Kettenglied 4 verbunden ist. Das Abschlussstück 24 umfasst demnach zwei parallele flache Schenkel 26, die jeweils an der Seitenwand des zugeordneten Kettelglieds 4 anliegen, und einen die Stirnseite des Kettengliedes 4 umschließenden Bogen 28, der endseitig in die Schenkel 26 übergeht. Die Befestigung des Abschlussstücks 24 am Kettenglied 4 erfolgt zweckmäßigerweise mit Hilfe von durch entsprechende Ausnehmungen im Kettenglied 4 und in den Schenkeln 26 hindurchgesteckten Kettenbolzen 6.

Zwischen der Stirnseite des letzten Kettenglieds 4 und dem Bogen 28 ist Platz zur Durchführung eines Querbolzens 30 angeordnet. Der Zwischenraum ist bevorzugt derart bemessen, dass der eingeschobene Querbolzen 30 darin weitgehend spielfrei liegt. Im Montageendzustand wird die axiale Position des 30 Querbolzens durch einen hier nicht dargestellten Sicherungssplint oder dergleichen relativ zum Abschlussstück 24 fixiert. Dabei ist der Querbolzen 30 senkrecht zur Längsrichtung der Schubkette 2 sowie senkrecht zur Richtung der Kettenbolzen 6 ausgerichtet. Der Querbolzen 30 ist hier im Beispiel ein Zylinderbolzen, weist also einen kreisförmigen Querschnitt auf.

Die Länge des Querbolzens 30 ist derart gewählt, dass er in der Montageendposition beidseits des Abschlussstücks 24 seitlich über dessen Rand übersteht und in zugehörige Aufnahmen des Anschlusselements 12 eingreift. Eine auf das jeweilige überstehende Ende des Querbolzens 30 ausgeübte Kraft überträgt sich damit auf das Abschlussstück 24 und das mit ihm verbundene Ende der Schubkette 2, wie weiter unten noch genauer beschrieben wird.

Im Montageendzustand, der in den Figuren dargestellt ist, ist das Abschlussstück 24 der Schubkette 2 in das Anschlusselement 12 eingesetzt. Das Anschlusselement 12 umfasst eine flache rechteckförmige Grundplatte 32 mit einer Oberseite 34, die zur Anbringung bzw. Anlage an dem zu betätigenden Objekt vorgesehen ist. Die Verbindung mit dem Objekt erfolgt bevorzugt durch Verschraubung, wozu die Grundplatte 34 geeignete Schraublöcher 36 aufweist.

Des Weiteren stehen auf der vom Objekt abgewandten Unterseite der Grundplatte 32 zwei flache Stege 38 jeweils senkrecht von der Grundplatte 32 ab. Der Abstand zwischen den Stegen 38 ist etwas größer gewählt als die Breite des Abschlussstücks 24 der Schubkette 2, so dass das Abschlussstück 24 in der in den Figuren dargestellten Ausrichtung mit Spiel zwischen die Stege 38 passt. Die Länge der Stege 38 in Richtung senkrecht zur Grundplatte 32 ist derart bemessen, dass sie in etwa bis zur Hälfte der Länge des eingesetzten Abschlussstücks 24 der Schubkette 32 reichen, mindestens jedoch bis zum jeweiligen Durchstoßpunkt des Querbolzens 30 und noch etwas darüber hinaus.

Der eine Steg 38 weist ein Rundloch 40 zur Aufnahme des einen überstehenden Endes des Querbolzens 30 auf. Der Durchmesser des Rundlochs 40 ist bevorzugt etwas größer als der Durchmesser des Querbolzens 30, so dass der Querbolzen 30 im Montageendzustand darin mit Spiel sitzt und gegenüber der Senkrechten auf dem Steg 38 gekippt werden kann. Der andere Steg 38 weist ein Langloch 42 zur Aufnahme des anderen überstehenden Endes des Querbolzens 30 auf. Das Langloch 42 verläuft parallel zur Längsrichtung des Steges 38, also in Längsrichtung des in das Anschlusselement 12 eingesetzten Endabschnitts der Schubkette 12.

Durch diese Ausgestaltung ist gewährleistet, dass das Abschlussstück 24 in das Anschlusselement 12 einsetzbar ist, wobei zur Montage zunächst das Abschlussstück 24 in den Zwischenraum zwischen den Stegen 38 geschoben und dann der Querbolzen 30 durch die zugeordneten Ausnehmungen geschoben und mittels eines Sicherungssplints fixiert wird. Dadurch ist im Montageendzustand das Ende der Schubkette 2 formschlüssig mit dem Abschlussstück 24 verbunden.

Im Montageendzustand ist bei geeignet gewählter Länge des Langlochs 42 das Abschlussstück 24 in der durch den Doppelpfeil dargestellten Weise in Kipprichtung 44 schwenkbar oder kippbar. Die Kippbewegung ist derart bemessen, dass in der unteren Endstellung des im Langloch 42 sitzenden Querbolzens 30 das Abschlussstück 24 und damit der gesamte vertikale Abschnitt der Schubkette 2 in Richtung der leicht überstreckten Konfiguration (mit Rückenbiegung) ausgelenkt ist. Der Querbolzen 30 ist dabei relativ zur Grundplatte 32 geneigt.

Durch ein an der Unterseite der Grundplatte 32 angebrachtes Federelement 46, auch als Schnapper bezeichnet, wird gewährleistet, dass die in Richtung der leicht übersteckten Kettenkonfiguration gekippte Stellung des Abschlussstücks 24 zwischen den Stegen 38 des Anschlusselements 12 im normalen Betrieb der Schubkette 2 tatsächlich erreicht wird. Das heißt, die Federvorspannung des Federelements 46 ist derart gewählt, dass die nach unten gerichtete Federkraft die gewöhnlichen betrieblichen Kräfte, die den Querbolzen 30 im Langloch 42 tendenziell nach oben zur Grundplatte 32 hindrücken, übersteigt. Dadurch wird die oben geschilderte Stabilisierung der Schubkette 2 beim Hochfahren in Schubrichtung 10 gewährleistet.

Das Herunterfahren der Schubkette 2 in Zugrichtung 8 ist unkritisch. Dabei wird die Schubkette 2 auf Zug belastet und das Federelement 46 belastet. Das Abschlussstück 24 kippt in diesem Fall in die Ursprungslage zurück, in welcher der Querbolzen 30 im Wesentlichen parallel zur Grundplatte 38 im Langloch 42 sitzt.

Durch gezielte manuelle Druckbeaufschlagung kann das Federelement 46 soweit zusammengedrückt werden, dass sich der Querbolzen 30 nach Entfernen des Sicherungssplints aus der Anordnung herausziehen und sich die Schubkette 2 vom Anschlusselement 12 lösen lässt.

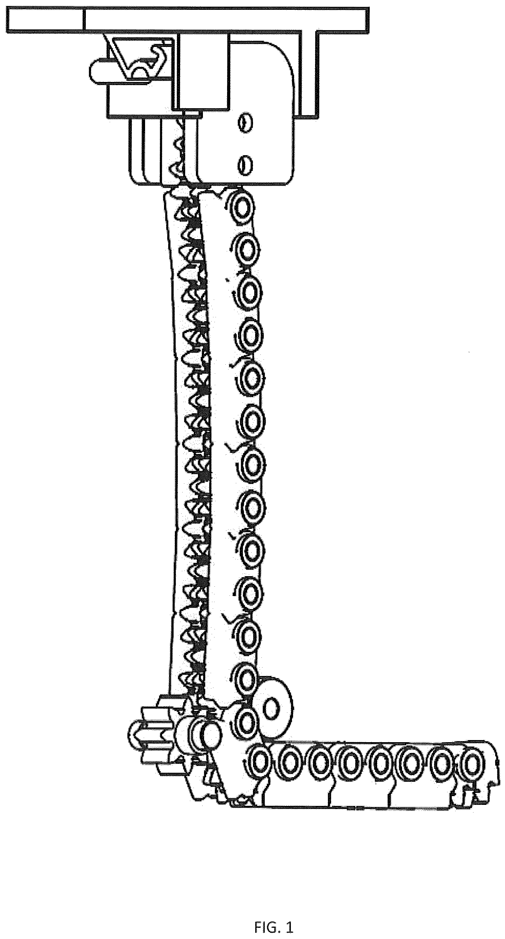

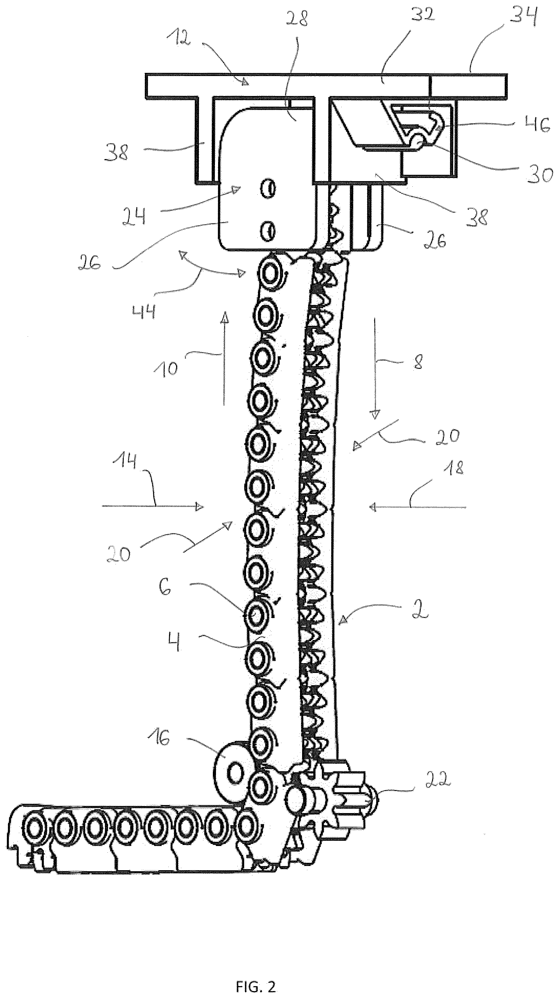

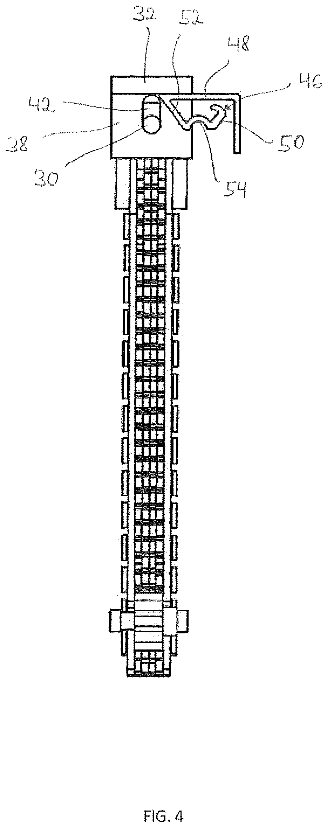

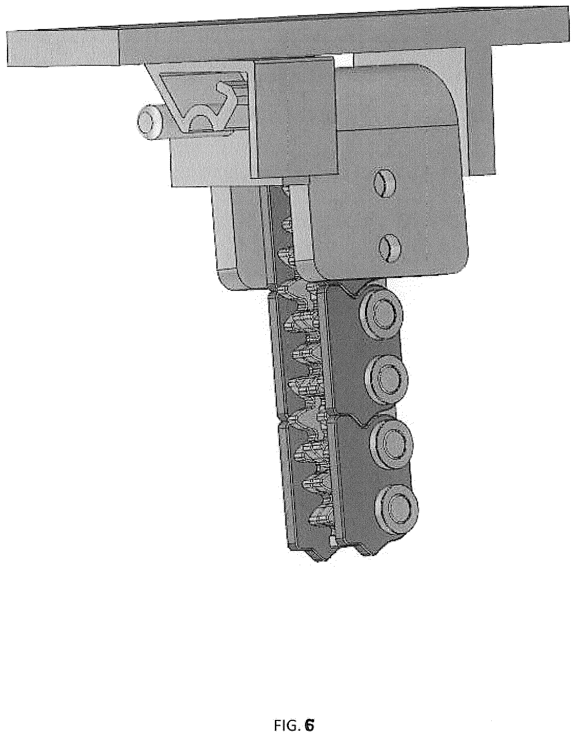

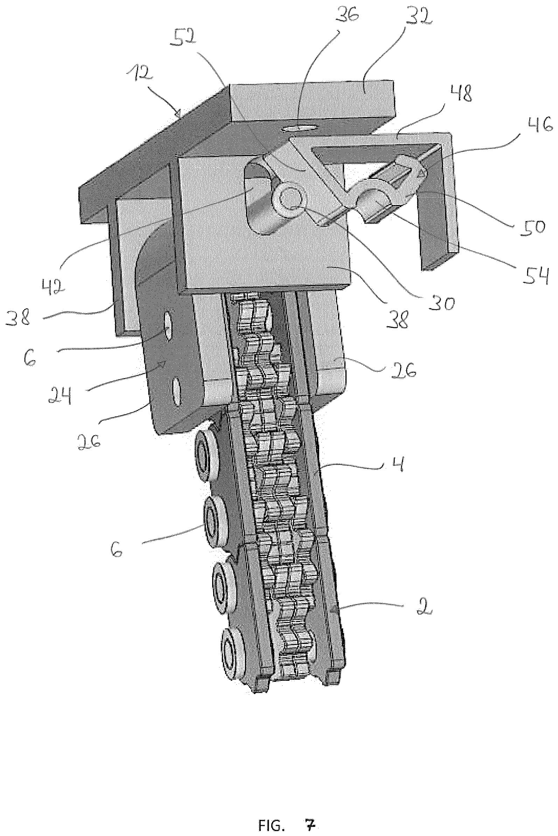

Um einen Zugang zum Langloch 42 zu ermöglichen, kann es vorgesehen sein, das Federelement 46 aus seiner gewöhnlichen Betriebsstellung (FIG. 2) seitlich in eine Parkstellung zu verschieben, wie in einigen der Figuren (FIG. 1, 4, 6, 7) dargestellt. Dazu kann der Befestigungsschenkel 48 in einer entsprechend ausgestalteten Klemmschiene oder dergleichen an/in der Grundplatte 32 sitzen.

Das Federelement 46 ist bevorzugt eine Metallfeder mit einem länglichen Federstab oder -band. Es weist einen an der Grundplatte 32 anliegenden Befestigungsschenkel 48, einen auf den Querbolzen 30 einwirkenden Betätigungsschenkel 50 und einen dazwischen liegenden, federwirksamen Biegeabschnitt 52 oder Knick auf. Der Betätigungsschenkel 50 weist eine auf die Lage und den Durchmesser des Querbolzens 30 abgestimmte Einwölbung 54 auf. Dadurch ist ein Sitz für den Querbolzen 30 ausgebildet, aus dem der Querbolzen 30 nicht herausspringen kann. Das Federelement 46 ist als Druckfeder wirksam und drückt wie bereits beschrieben den Querbolzen 30 im Langloch 42 nach unten, wodurch die angestrebte Stabilisierung der Schubkette 2 in der überstreckten Konfiguration erreicht wird.

### Bezugszeichenliste

- 2: Schubkette
- 4: Kettenglied
- 6: Kettenbolzen
- 8: Zugrichtung
- 10: Schubrichtung
- 12: Anschlusselement
- 14: Biegerichtung
- 16: Umlenkrolle
- 18: Sperrrichtung
- 20: Seitenrichtung
- 22: Kettenrad
- 24: Abschlussstück
- 26: Schenkel
- 28: Bogen
- 30: Querbolzen
- 32: Grundplatte
- 34: Oberseite
- 36: Schraubloch
- 38: Steg
- 40: Rundloch
- 42: Langloch
- 44: Kipprichtung
- 46: Federelement
- 48: Befestigungsschenkel
- 50: Betätigungsschenkel
- 52: Biegeabschnitt
- 54: Einwölbung

## Patentansprüche

1. Schubkettenanordnung mit einer aus einer Mehrzahl von Kettengliedern (4) zusammengesetzten Schubkette (2), die sich bei Krafteinwirkung entlang einer Biegerichtung (14) umlenken lässt, und die sich bei Kraftbeinwirkung entlang einer Sperrrichtung (18) in eine schubstabile, vorzugsweise geringfügig überstreckte Konfiguration bringen lässt,
wobei an einem Ende der Schubkette (2) ein Abschlussstück (24) montiert ist, welches mit einem zur Anbringung an ein zu betätigendes Objekt vorgesehenen Anschlusselement (12) verbunden ist,
wobei das Abschlussstück (24) derart kippbar oder schwenkbar und mittels eines Federelements (46) federbelastet in/an dem Anschlusselement (12) gelagert ist, dass die Schubkette (2) bei Schubbelastung durch die Federkraft des Federelements (46) in die schubstabile Konfiguration gebracht wird,
**dadurch gekennzeichnet, dass** das Abschlussstück (24) und das Anschlusselement (24) über einen Querbolzen (30) miteinander verbunden sind, und wobei der Querbolzen (30) auf der einen Seite in einem Rundloch (40) und auf der anderen Seite in einem Langloch (42) des Anschlusselements (24) gelagert ist.

2. Schubkettenanordnung nach Anspruch 1, wobei das Federelement (46) am Anschlusselement (12) befestigt ist und direkt auf den Querbolzen (30) wirkt.

3. Schubkettenanordnung nach Anspruch 1 oder 2, wobei die Verbindung zwischen Abschlussstück (24) und Anschlusselement (12) durch Herausziehen des Querbolzens (30) lösbar ist.

4. Schubkettenanordnung nach einem der vorangehenden Ansprüche, wobei das Abschlussstück (24) als ein das Ende der Schubkette (24) umgreifender U-förmiger Bügel ausgebildet ist.

5. Schubkettenanordnung nach einem der vorangehenden Ansprüche, wobei das Federelement (46) ein gebogenes Stahlband oder -stab oder -blatt ist.

6. Schubkettenanordnung nach einem der vorangehenden Ansprüche, wobei ein zwischen dem Anschlusselement (12) und einer Umlenkrolle (16) oder einem Antriebsrad liegender Abschnitt der Schubkette (2) ohne weitere Abstützung oder Führung läuft.

7. Betätigungsvorrichtung für ein bewegliches Objekt, insbesondere ein Flügel, eine Klappe, ein Fenster oder eine Tür, mit einer Schubkettenanordnung nach einem der vorangehenden Ansprüche, wobei das Anschlusselement (12) fest mit dem Objekt verbunden ist.

## Claims

1. A thrust chain assembly having a thrust chain (2) which is composed of a plurality of chain links (4) and can be deflected when force is applied along a bending direction (14) and which can be brought into a thrust-stable, preferably slightly overstretched configuration when force is applied along a locking direction (18),
wherein an end piece (24) is mounted on one end of the thrust chain (2) and is connected to a connection element (12) provided for attachment to an object to be actuated,
wherein the end piece (24) can be tilted or pivoted and mounted in/on the connection element (12) in a springloaded manner by means of a spring element (46) in such a way that the thrust chain (2) is brought into the thrust-stable configuration by the spring force of the spring element (46) under thrust load,
**characterized in that** the end piece (24) and the connection element (24) are connected to one another via a transverse bolt (30), and wherein the transverse bolt (30) is mounted on the one side in a round hole (40) and on the other side in an elongate hole (42) of the connection element (24).

2. The thrust chain assembly according to Claim 1, wherein the spring element (46) is attached to the connection element (12) and acts directly on the transverse bolt (30) .

3. The thrust chain assembly according to Claim 1 or 2, wherein the connection between the end piece (24) and the connection element (12) can be released by removing the transverse bolt (30).

4. The thrust chain assembly according to one of the preceding claims, wherein the end piece (24) is designed as a U-shaped bracket engaging around the end of the thrust chain (24).

5. The thrust chain assembly according to one of the preceding claims, wherein the spring element (46) is a bent steel strip or bar or sheet.

6. The thrust chain assembly according to one of the preceding claims, wherein a section of the thrust chain (2) located between the connection element (12) and a deflection roller (16) or a drive wheel runs without further support or guidance.

7. An actuating device for a moveable object, in particular a sash, flap, window or door, having a thrust chain assembly according to one of the preceding claims, wherein the connection element (12) is fixedly connected to the object.

## Revendications

1. Ensemble de chaîne de poussée, pourvu d'une chaîne de poussée (2) composée d'une pluralité de maillons (4) de chaîne, qui sous l'action d'une force, se laisse dévier le long d'une direction de flexion (14) et qui sous l'action d'une force se laisse amener le long d'une direction de blocage (18) dans une configuration stable à la poussée, de préférence légèrement distendue,
sur une extrémité de la chaîne de poussée (2) étant montée une pièce de terminaison (24), laquelle est assemblée avec un élément de raccordement (12) prévu sur un objet qui doit être actionné,
la pièce de terminaison (24) étant susceptible d'être basculée ou pivotée et étant logée en étant contrainte au moyen d'un élément à ressort (46) dans / sur l'élément de raccordement (12) de telle sorte que lors d'une contrainte en poussée, la chaîne de poussée (2) soit amenée par la force du ressort de l'élément à ressort (46) dans la configuration stable en poussée,
**caractérisé en ce que** la pièce de terminaison (24) et l'élément de raccordement (24) sont assemblés l'un avec l'autre par un goujon transversal (30) et le goujon transversal (30) étant logé sur l'un des côtés dans un trou rond (40) et sur l'autre côté dans un trou oblong (42) de l'élément de raccordement (24).

2. Ensemble de chaîne de poussée selon la revendication 1, l'élément à ressort (46) étant fixé sur l'élément de raccordement (12) et agissant directement sur le goujon transversal (30).

3. Ensemble de chaîne de poussée selon la revendication 1 ou 2, l'assemblage entre la pièce de terminaison (24) et l'élément de raccordement (12) étant désolidarisable par retrait vers l'extérieur du goujon transversal (30).

4. Ensemble de chaîne de poussée selon l'une quelconque des revendications précédentes, la pièce de terminaison (24) étant conçue sous la forme d'un étrier en forme de U entourant l'extrémité de la chaîne de poussée (24).

5. Ensemble de chaîne de poussée selon l'une quelconque des revendications précédentes, l'élément à ressort (46) étant une bande ou une barre ou une feuille d'acier recourbée.

6. Ensemble de chaîne de poussée selon l'une quelconque des revendications précédentes, un segment de la chaîne de poussée (2) situé entre l'élément de raccordement (12) et un galet de renvoi (16) ou une roue d'entraînement fonctionnant sans soutien ni guidage additionnel.

7. Dispositif d'actionnement d'un objet déplaçable, notamment une aile, un clapet, une fenêtre ou une porte, pourvu d'un ensemble de chaîne de poussée selon l'une quelconque des revendications précédentes, l'élément de raccordement (12) étant fixement assemblé avec l'objet.
